# EUROPÄISCHE PATENTANMELDUNG

(11) **EP 1 206 991 A2**
(43) Veröffentlichungstag der Anmeldung: **22.05.2002**
(21) Anmeldenummer: 01126461.1
(22) Anmeldetag: 09.11.2001
(51) Int. Cl.: B23C 3/34, B23Q 1/62, B23Q 15/013

(54) **Werkzeugmaschine und Steuerverfahren dafür**

(30) Priorität: 10.11.2000 DE 10055800
(71) Anmelder: Schwäbische Werkzeugmaschinen GmbH, 78713 Schramberg-Waldmössingen (DE)
(72) Erfinder: Huber, Gerhard, 78727 Oberndorf (DE)
(74) Vertreter: KOHLER SCHMID + PARTNER

(57) **Zusammenfassung**

Bei einer Werkzeugmaschine mit einem um die C-Achse (5) rotierenden Werkzeug, welches mittels eines X-Y-Maschinenschlittens in X- und Y-Richtung verfahrbar ist, ist erfindungsgemäß der Rotationsbewegung (11) des Werkzeugs um die C-Achse (5) eine Verfahrbewegung (14) des X-Y-Maschinenschlittens um eine virtuelle Drehachse (12) überlagert, derart, daß die Schneide (7) des Werkzeugs bezüglich der virtuellen Achse (12) stets radial nach außen gerichtet bleibt. Die Schneide ist während der Verfahrbewegung des X-Y-Maschinenschlittens stets zum Werkstück gerichtet, wodurch am Werkstück eine gleichmäßige Spanabhebung ermöglicht wird.

## Beschreibung

Die Erfindung betrifft eine Werkzeugmaschine mit einem um die C-Achse rotierenden Werkzeug, welches mittels eines X-Y-Maschinenschlittens in X- und Y-Richtung verfahrbar ist, sowie ein Verfahren zum Steuern einer solchen Werkzeugmaschine.

Derartige Werkzeugmaschinen sind hinlänglich bekannt, wobei zur Fertigung einer Ringnut z.B. rotierende Fräswerkzeuge mit mehreren Schneiden verwendet werden.

Allerdings führen die mehreren Schneiden des Fräswerkzeugs am Werkstück zu einer unerwünschten wellenförmigen Spanabhebung. Darüberhinaus wird das Fräswerkzeug beim Fertigen von Radialflächen auf einer Kreisbahn geführt, so daß an den Radialflächen, wie z.B. Nutwänden, in sich geschlossene Ringrillen entstehen, welche die Dichtwirkung von anliegenden Dichtungen beeinträchtigen können.

Es ist daher die Aufgabe der Erfindung, eine Werkzeugmaschine der eingangs genannten Art derart zu verbessern, daß beim Fertigen von Radialflächen eine gleichmäßige Spanabhebung am Werkstück ermöglicht wird, sowie ein entsprechendes Steuerverfahren für die Werkzeugmaschine anzugeben.

Diese Aufgabe wird erfindungsgemäß dadurch gelöst, daß der Rotationsbewegung des Werkzeugs um die C-Achse eine Verfahrbewegung des X-Y-Maschinenschlittens um eine virtuelle Drehachse überlagert ist, derart, daß die Schneide des Werkzeugs bezüglich der virtuellen Achse stets radial nach außen gerichtet bleibt.

Der mit der Erfindung erzielte Vorteil besteht darin, daß das Werkstück mit nur einer einzigen Schneide bearbeitet wird, die während der Verfahrbewegung des X-Y-Maschinenschlittens stets zum Werkstück gerichtet ist und daher am Werkstück zu einer gleichmäßigen Spanabhebung führt.

Die virtuelle Drehachse kann während der Bearbeitung des Werkstücks eine räumliche Fixachse bleiben oder aber ihrerseits auf einer Umlaufbahn, z.B. auf einem Kreis oder einer Ellipse, geführt sein. In jedem Fall ist die C-Achse, wenn die Schneide einmal um die C-Achse rotiert ist, ebenfalls einmal um die virtuelle Drehachse verfahren. Die Schneide des Werkzeugs bleibt dann bezüglich der virtuellen Drehachse stets radial nach außen gerichtet.

Indem das Werkzeug während seiner Verfahrbewegung um die virtuelle Drehachse radial bezüglich der virtuellen Drehachse verfahren wird, bewegt sich das Werkzeug bzw. seine Schneide auf einer spiralförmigen Bewegungsbahn um die virtuelle Drehachse, so daß keine in sich geschlossenen Ringrillen entstehen.

Bevorzugt weist das Werkzeug nur eine einzige Schneide auf. In anderen Varianten können aber auch mehrere Schneiden vorgesehen sein.

Die erfindungsgemäße Werkzeugmaschine weist vorzugsweise eine Steuerungseinrichtung für die Rotationsbewegung des Werkzeugs und/oder die Verfahrbewegung des X-Y-Maschinenschlittens. Die Steuerungseinrichtung interpoliert die X-Y-Koordinaten des X-Y-Maschinenschlittens entsprechend der Rotation des Werkzeugs.

Bei einer bevorzugten Ausführungsform weist die Werkzeugmaschine einen Antrieb zum Verfahren des Werkzeugs in Z-Richtung auf. Indem das Werkzeug während der Bearbeitung des Werkstücks in Z-Richtung verschoben wird, kann ein Werkstück mit z.B. einer Schraubenkontur gefertigt werden.

Erfindungsgemäß wird zum Steuern einer Werkzeugmaschine mit einem um die C-Achse rotierenden Werkzeug, welches mittels eines X-Y-Maschinenschlittens in X- und Y-Richtung verfahrbar ist, das Werkzeug um die C-Achse rotiert und gleichzeitig der X-Y-Maschinenschlitten um eine virtuelle Drehachse verfahren, derart, daß die Schneide des Werkzeugs bezüglich der virtuellen Achse stets radial nach außen gerichtet bleibt.

Vorzugsweise läßt sich das Werkzeug während seiner Verfahrbewegung um die virtuelle Drehachse radial bezüglich der virtuellen Drehachse verfahren und während seiner Rotations- und Verfahrbewegung auch in Z-Richtung verfahren.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: schematisch den X-Y-Maschinenschlitten und das Werkzeug einer erfindungsgemäßen Werkzeugmaschine beim Bearbeiten eines Werkstücks;
- Fig. 2: schematisch die Rotationsbewegung des Werkzeugs um die C-Achse und die Verfahrbewegung des X-Y-Maschinenschlittens um eine virtuelle Drehachse; und
- Fig. 3: die sich beim Bearbeiten eines Werkstücks spiralförmig nach außen vergrößernde Bewegungsbahn der Schneide des Werkzeugs.

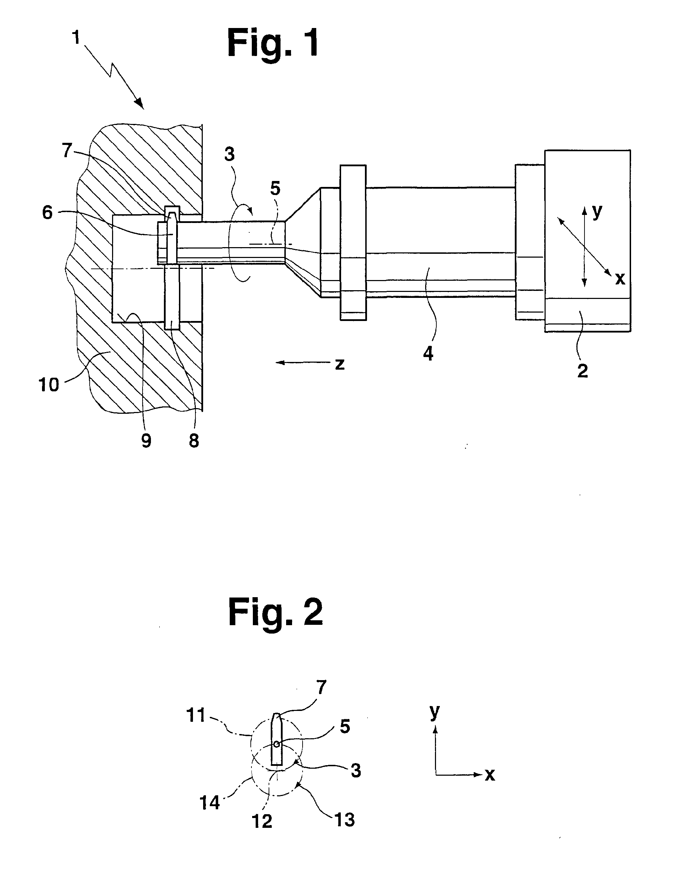

Die in **Fig. 1** gezeigte Werkzeugmaschine **1** umfaßt einen in X- und Y-Richtung verfahrbaren X-Y-Maschinenschlitten **2,** der eine in Drehrichtung **3** angetriebene Arbeitsspindel **4** trägt. Die Lagerung und der Antrieb der Arbeitsspindel 4 am X-Y-Maschinenschlitten 2 sowie die Lagerung und der Antrieb des X-Y-Maschinenschlittens 2 sind Stand der Technik und daher nicht näher dargestellt. Die Drehachse der Arbeitsspindel 4, die sogenannte C-Achse, ist mit **5** bezeichnet. Am freien Ende der Arbeitsspindel 4 ist ein Werkzeug **6** mit nur einer Schneide **7** angeordnet.

Im gezeigten Ausführungsbeispiel dient das Werkzeug 6 zum Fertigen einer ringförmigen Innennut **8** in einer Bohrung **9** eines Werkstücks **10**. Dazu wird der kreisförmigen Rotationsbewegung **11** (**Fig. 2**) der Schneide 7 um die C-Achse 5 eine Verfahrbewegung des X-Y-Maschinenschlittens 2 um eine virtuelle Drehachse **12** in Drehrichtung **13** überlagert. Dabei sind die Drehzahlen und die Drehrichtungen 3, 13 beider Bewegungen einander jeweils gleich, so daß die C-Achse 5, wenn die Schneide 7 einmal um die C-Achse 5 rotiert ist, ebenfalls einmal um die virtuelle Drehachse 12 auf der Kreisbahn **14** verfahren ist. Die Schneide 7 des Werkzeugs 6 bleibt dann bezüglich der virtuellen Drehachse 12 stets radial nach außen gerichtet. Eine Steuerungseinrichtung (nicht dargestellt) steuert die Verfahrbewegung des X-Y-Maschinenschlittens 2, wobei die X-Y-Koordinaten des X-Y-Maschinenschlittens 2 entsprechend der Rotation des Werkzeugs 6 interpoliert werden.

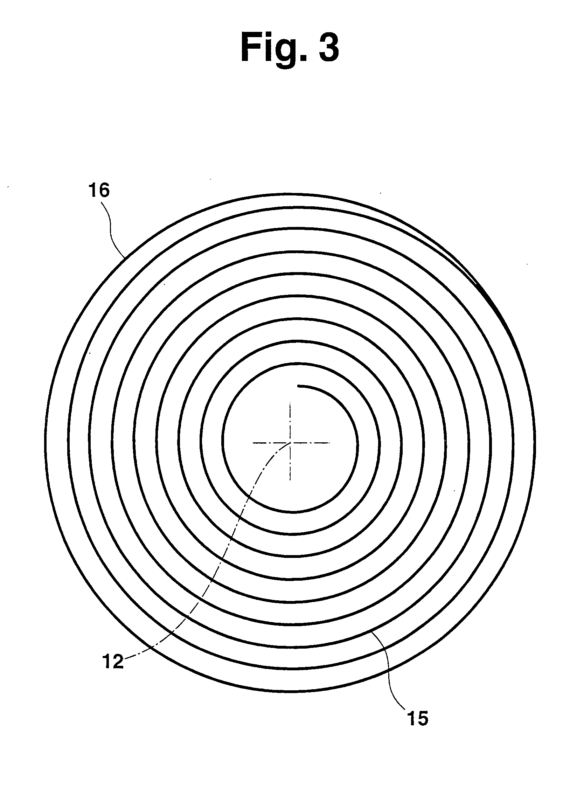

Zum Fertigen der ringförmigen Innennut 8 wird das Werkzeug 6 in Z-Richtung in die Bohrung 9 eingetaucht, wobei die Schneide 7 noch von der Bohrungswand beabstandet ist. Dann wird bei rotierender Schneide 7 die C-Achse 5 um die virtuelle Drehachse 12 und mittels des X-Y-Maschinenschlittens 2 bezüglich der virtuellen Drehachse 11 radial nach außen verfahren, bis die Schneide 7 Material vom Werkstück 10 abträgt und schließlich die gewünschte Tiefe der Innennut 8 erreicht ist. Die Schneide 7 nähert sich so auf einer spiralförmigen Bewegungsbahn **15** (**Fig. 3**) um die virtuelle Drehachse 12 ihrer endgültigen Außenkreisbahn **16**, die der gewünschten Nuttiefe der Innennut 8 entspricht. Die Mittelachse der so gefertigten Innennut 8 entspricht der virtuellen Drehachse 12 des X-Y-Maschinenschlittens 2.

## Patentansprüche

1. Werkzeugmaschine (1) mit einem um die C-Achse (5) rotierenden Werkzeug (6), welches mittels eines X-Y-Maschinenschlittens (2) in X- und Y-Richtung verfahrbar ist,
**dadurch gekennzeichnet,**
**daß** der Rotationsbewegung (11) des Werkzeugs (6) um die C-Achse (5) eine Verfahrbewegung (14) des X-Y-Maschinenschlittens (2) um eine virtuelle Drehachse (12) überlagert ist, derart, daß die Schneide (7) des Werkzeugs (6) bezüglich der virtuellen Achse (12) stets radial nach außen gerichtet bleibt.

2. Werkzeugmaschine nach Anspruch 1, **dadurch gekennzeichnet, daß** das Werkzeug (6) eine oder mehrere Schneiden (7) aufweist.

3. Werkzeugmaschine nach Anspruch 1 oder 2, **gekennzeichnet durch** eine Steuerungseinrichtung für die Rotationsbewegung (11) des Werkzeugs (6) und/oder die Verfahrbewegung (14) des X-Y-Maschinenschlittens (2).

4. Werkzeugmaschine nach Anspruch 3, **dadurch gekennzeichnet, daß** die Steuerungseinrichtung den X-Y-Maschinenschlitte (2) für eine sich spiralförmig um die virtuelle Drehachse (12) nach außen vergrößernde Bewegungsbahn der Schneide (7) ansteuert, bis eine gewünschte Kreisbahn der Schneide (7) um die virtuelle Drehachse (12) erreicht ist.

5. Werkzeugmaschine nach einem der vorhergehenden Ansprüche, **gekennzeichnet durch** einen Antrieb zum Verfahren des Werkzeugs (6) in Z-Richtung.

6. Verfahren zum Steuern einer Werkzeugmaschine (1) mit einem um die C-Achse (5) rotierenden Werkzeug (6), welches mittels eines X-Y-Maschinenschlittens (2) in X- und Y-Richtung verfahrbar ist,
**dadurch gekennzeichnet,**
**daß** das Werkzeug (6) um die C-Achse (5) rotiert und gleichzeitig der X-Y-Maschinenschlitten (2) um eine virtuelle Drehachse (12) verfahren wird, derart, daß die Schneide (7) des Werkzeugs (6) bezüglich der virtuellen Achse (12) stets radial nach außen gerichtet bleibt.

7. Verfahren nach Anspruch 6, **dadurch gekennzeichnet, daß** das Werkzeug (6) während seiner Verfahrbewegung (14) um die virtuelle Drehachse (12) radial bezüglich der virtuellen Drehachse (12) verfahren wird.

8. Verfahren nach Anspruch 8, **dadurch gekennzeichnet, daß** die Bewegungsbahn der Schneide (7) spiralförmig um die virtuelle Drehachse (12) nach außen vergrößert wird, bis eine gewünschte Kreisbahn der Schneide (7) um die virtuelle Drehachse (12) erreicht ist.

9. Verfahren nach einem der Ansprüche 6 bis 8, **dadurch gekennzeichnet, daß** das Werkzeug (6) während seiner Rotations- und Verfahrbewegung (11, 14) in Z-Richtung verfahren wird.
